# EUROPEAN PATENT APPLICATION

(11) **EP 4 793 765 A1**
(43) Date of publication of application: **19.08.2026**
(21) Application number: 24852932.3
(22) Date of filing: 25.12.2024
(51) Int. Cl.: G06F 8/71, G06F 8/76

(54) **INTERFACE FUSING METHOD, INTERFACE FUSING DEVICE AND COMPUTER-READABLE STORAGE MEDIUM**

(30) Priority: 09.10.2024 CN 202411401204
(71) Applicant: Hangzhou Pingpong Intelligence Technology Co. Ltd., Hangzhou, Zhejiang 310052 (CN)
(72) Inventor: PENG, Nian, Hangzhou, Zhejiang 310052 (CN)
(74) Representative: Petraz, Gilberto Luigi
(86) International application number: PCT/CN2024/142369
(87) International publication number: WO 2026/076836

(57) **Abstract**

An interface fusing method, an interface fusing apparatus, and a computer-readable storage medium are provided. The method includes: determining, according to a fusing configuration parameter and a current status of a circuit breaker, whether a target method meets a calling condition, determining whether the target method is called successfully, if yes, executing a preconfigured fusing rule according to meta information of the target method; if an executing result of the fusing rule is true, counting the quantity of calling times and the quantity of error calling times; if the target method is failed to be called, determining, with reference to the fusing configuration parameter and according to the quantity of calling times and the quantity of error calling times in a preset sliding time window, whether to perform fusing processing on the target method, if yes, performing fusing processing on the target method.

## Description

### CROSS-REFERENCE TO RELATED APPLICATION

This application claims priority to Chinese patent application No. 202411401204.6, filed on October 9, 2024, titled "INTERFACE FUSING METHOD, INTERFACE FUSING APPARATUS, AND COMPUTER-READABLE STORAGE MEDIUM", the entire content of which is hereby incorporated by reference.

### TECHNICAL FIELD

The present invention generally relates to the field of computer technology, and in particular, to an interface fusing method, an interface fusing apparatus, and a computer-readable storage medium.

### BACKGROUND

In a data interaction scenario between an upstream service system and a downstream service system, or in a data interaction scenario between the upstream service system and a third-party service system, the upstream service system usually needs to call a service interface of the downstream service system or the third-party service system to implement service processing. When a response anomaly occurs in the downstream service system or the third-party service interface, for example, when a failure service response such as a required field missing or a balance insufficient occurs, a service logic processing corresponding to a call failure of a corresponding service interface is not set in the current upstream service system, which results in that the upstream service system continuously calls an abnormal service interface, and consequently, service processing of the upstream service system has a relatively high failure rate.

Therefore, there is still a problem of high failure rate of calling interface in the related art.

### SUMMARY

According to various embodiments of the present invention, an interface fusing method, an interface fusing apparatus, and a computer-readable storage medium are provided.

In a first aspect, an interface fusing method is provided in the present embodiment, including: acquiring meta information and a fusing configuration parameter of a target method of an interface based on a target forward notification, and determining, according to the fusing configuration parameter and a current status of a circuit breaker, whether the target method meets a calling condition, if yes, calling the target method, in which the target forward notification is a forward notification of an Aspect Oriented Programming section that is pre-configured for the target method; determining, based on a target backward notification, whether the target method is called successfully, if yes, executing a preconfigured fusing rule according to the meta information of the target method; and if an executing result of the fusing rule is true, counting the quantity of calling times and the quantity of error calling times, in which the target backward notification is a backward notification of the Aspect Oriented Programming section that is pre-configured for the target method; if the target method is failed to be called, counting the quantity of calling times and the quantity of error calling times according to the fusing configuration parameter; and determining, with reference to the fusing configuration parameter and according to the quantity of calling times and the quantity of error calling times in a preset sliding time window, whether to perform fusing processing on the target method, if yes, performing fusing processing on the target method.

In some embodiments, determining, according to the fusing configuration parameter and the current status of the circuit breaker, whether the target method meets the calling condition further includes: in a case that the fusing configuration parameter is not null and the current state of the circuit breaker is closed, determining that the target method meets the calling condition.

In some embodiments, determining, according to the fusing configuration parameter and the current status of the circuit breaker, whether the target method meets the calling condition further includes: in a case that the fusing configuration parameter is not null and the current state of the circuit breaker is open, determining whether a current timestamp is greater than or equal to a next retry timestamp, if yes, setting the current state of the circuit breaker to half open, and confirming that the target method meets the calling condition, in which the next retry timestamp is determined according to a fusing duration specified by the fusing configuration parameter and a timestamp corresponding to last performing fusing processing on the target method; otherwise, confirming that the target method does not meet the calling condition, and executing a preset fusing degradation policy.

In some embodiments, determining, according to the fusing configuration parameter and the current status of the circuit breaker, whether the target method meets the calling condition further includes: in a case that the fusing configuration parameter is not null and the current state of the circuit breaker is half open, confirming that the target method does not meet the calling condition, and executing a preset fusing degradation policy.

In some embodiments, the method further includes: in a case that the fusing configuration parameter is null, confirming that the target method meets the calling condition.

In some embodiments, if the target method is failed to be called, counting the quantity of calling times and the quantity of error calling times according to the fusing configuration parameter further includes: if the target method is failed to be called, acquiring a calling anomaly type of calling failure of the target method; and determining whether the calling anomaly type is consistent with a preset anomaly type specified in the fusing configuration parameter, if yes, counting the quantity of calling times and the quantity of error calling times in the current sliding time window.

In some embodiments, determining, with reference to the fusing configuration parameter and according to the quantity of calling times and the quantity of error calling times in a preset sliding time window, whether to perform fusing processing on the target method further includes: when a fusing determining condition specified by the fusing configuration parameter is an anomaly quantity, the quantity of calling times is greater than or equal to a minimum quantity of requests specified by the fusing configuration parameter, and the quantity of error calling times is greater than or equal to a quantity threshold specified by the fusing configuration parameter, confirming to perform fusing processing on the target method, set the current state of the circuit breaker to open, and set a next retry timestamp according to a specified fusing duration; and when the fusing determining condition is an anomaly proportion, the quantity of calling times is greater than or equal to the minimum quantity of requests, and an error calling proportion is greater than or equal to a proportion threshold specified by the fusing configuration parameter, confirming to perform fusing processing on the target method, set the current state of the circuit breaker to open, and set the next retry timestamp according to the fusing duration. The error calling proportion is a proportion of the quantity of error calling times to the quantity of calling times.

In some embodiments, duration of the sliding time window is set according to fusing statistics duration specified by the fusing configuration parameter, and the sliding time window includes several sub-time window intervals.

In a second aspect, an interface fusing apparatus is provided in the present embodiment, including an acquiring module, a determining module, a counting module, and a fusing processing module. The acquiring module is configured for acquiring meta information and a fusing configuration parameter of a target method of an interface based on a target forward notification, and determining, according to the fusing configuration parameter and a current status of a circuit breaker, whether the target method meets a calling condition, if yes, calling the target method, wherein the target forward notification is a forward notification of an Aspect Oriented Programming section that is pre-configured for the target method. The determining module is configured for determining, based on a target backward notification, whether the target method is called successfully, if yes, executing a preconfigured fusing rule according to the meta information of the target method; and if an executing result of the fusing rule is true, counting the quantity of calling times and the quantity of error calling times, wherein the target backward notification is a backward notification of the Aspect Oriented Programming section that is pre-configured for the target method. The counting module is configured for counting the quantity of calling times and the quantity of error calling times according to the fusing configuration parameter when the target method is failed to be called. The fusing processing module is configured for determining, with reference to the fusing configuration parameter and according to the quantity of calling times and the quantity of error calling times in a preset sliding time window, whether to perform fusing processing on the target method, if yes, performing fusing processing on the target method.

In a third aspect, a computer-readable storage medium is provided in the present embodiment, storing a computer program. The computer program is executed by a processor to perform the interface fusing method in the first aspect.

Details of one or more embodiments of the present invention are proposed in the following accompanying drawings and descriptions, so that other features, objects, and advantages of the present invention are more easily understood.

### BRIEF DESCRIPTION OF THE DRAWINGS

In order to more clearly describe technical solutions in the embodiments or the related art, the following briefly describes the accompanying drawings required for describing the embodiments or the conventional technologies. Apparently, the accompanying drawings in the following description show merely the embodiments of the present invention, and one skilled in the art may still derive other drawings from the disclosed accompanying drawings without creative efforts.
FIG. 1 is a block diagram of a hardware structure of a terminal of an interface fusing method in an embodiment.
FIG. 2 is a flowchart of an interface fusing method in an embodiment.
FIG. 3 is a flowchart of a configuring method of fusing configuring parameter in some embodiments.
FIG. 4 is a flowchart of an interface fusing method in some embodiments.
FIG. 5 is a block diagram of an interface fusing apparatus in an embodiment.

### DETAILED DESCRIPTION OF THE EMBODIMENT

The following clearly and completely describes the technical solutions in the embodiments of the present invention with reference to the accompanying drawings in the embodiments of the present invention. Apparently, the described embodiments are merely some rather than all of the embodiments of the present invention. Based on the embodiments of the present invention, all other embodiments obtained by one skilled in the art without creative efforts fall within the protection scope of the present invention.

Unless otherwise defined, the technical or scientific terminology involved in the present invention shall have a general meaning understood by one skilled in the art to which the present invention belongs. Similar words such as "a", "an", "one", "the", "this" in the present invention do not represent a quantity limitation, and may be a singular number or a complex number. The terms "include", "contain", "have" and any variants thereof as used in the present invention are intended to cover non-exclusive inclusion. For example, processes, methods, systems, products, or devices including a series of steps or modules (units) are not limited to listed steps or modules (units), but may include unlisted steps or modules (units), or may include other steps or modules (units) inherent to these processes, methods, products, or devices. Similar terms such as "connect", "connecting", and "coupling" in the present invention are not limited to physical or mechanical connections, but may include electrical connections, whether direct or indirect. "a plurality of" in the present invention refers to two or more. "And/or" describes an association relationship of associated objects, and indicates that there may be three relationships. For example, "A and/or B" may indicate that there are three cases: A alone, A and B together, and B alone. Generally, the character "/" indicates that the associated objects are in a "or" relationship. The terms "first", "second", "third" and the like in the present invention are merely used to distinguish similar objects, and do not represent specific sorting for the objects.

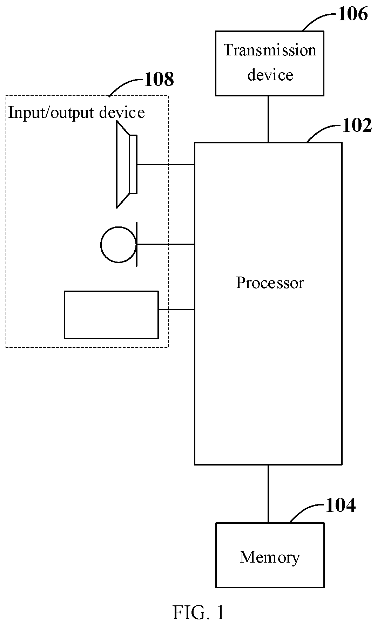

A method embodiment provided in the present embodiment may be executed in a terminal, a computer, or a similar operation apparatus. For example, the method may be performed in the terminal, and FIG. 1 is a block diagram of a hardware structure of a terminal of an interface fusing method in the present embodiment. Referring to FIG. 1, the terminal may include one or more processors 102 (only one of which is shown in FIG. 1) and a memory 104 configured to store data. The processor 102 may include but is not limited to a processing apparatus such as a MCU (Microcontroller Unit) or a FPGA (Field Programmable Gate Array). The foregoing terminal may further include a transmission device 106 and an input/output device 108 that are configured for a communication function. One skilled in the art may understand that the structure shown in FIG. 1 is merely an example, and does not impose a limitation on the structure of the foregoing terminal. For example, the terminal may further include more or fewer components than those shown in FIG. 1, or have different configurations from those shown in FIG. 1.

The memory 104 may be configured to store a computer program, for example, a software program and a module of application software, such as a computer program corresponding to an interface fusing method in the present embodiment. The processor 102 may execute various functional applications and data processing by running a computer program stored in the memory 104, i.e., implement the foregoing method. The memory 104 may include a high-speed random-access memory, and may further include a non-volatile memory, such as one or more magnetic storage apparatuses, a flash memory, or other non-volatile solid-state memory. In some examples, the memory 104 may further include a memory remotely disposed relative to the processor 102, which may be connected to a terminal over a network. Examples of the foregoing networks may include but not limited to the Internet, an intranet, a local area network, a mobile communication network, and a combination thereof.

The transmission device 106 is configured to receive or send data by a network. The foregoing network may include a wireless network provided by a communication provider of the terminal. In an example, the transmission device 106 may include a Network Interface Controller (NIC), which may be connected to other network devices by a base station, so as to communicate with the Internet. In an example, the transmission device 106 may be a Radio Frequency (RF) module that is configured to be in communication with the Internet in a wireless manner.

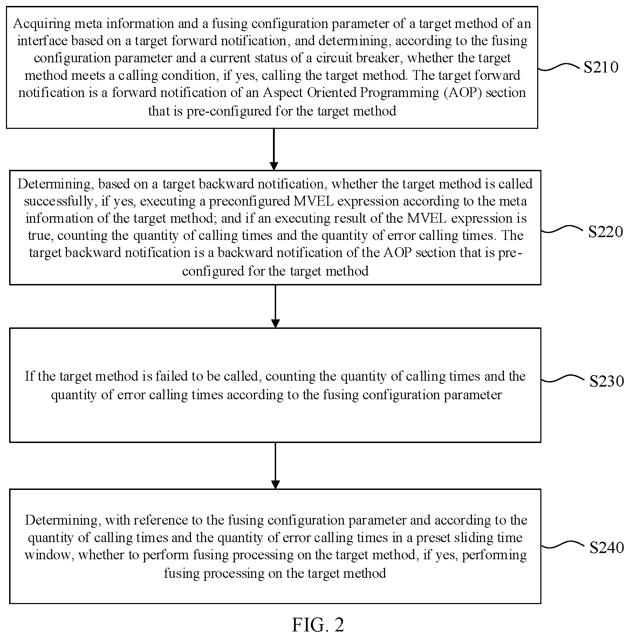

In the present embodiment, an interface fusing method is provided. FIG. 2 is a flowchart of the interface fusing method in the present embodiment. Referring to FIG. 2, the method includes the following step 210 to step 240.

Step 210 includes acquiring meta information and a fusing configuration parameter of a target method of an interface based on a target forward notification, and determining, according to the fusing configuration parameter and a current status of a circuit breaker, whether the target method meets a calling condition, if yes, calling the target method. The target forward notification is a forward notification of an Aspect Oriented Programming (AOP) section that is pre-configured for the target method.

The target method may be a method in which a fusing function needs to be enabled. The target method may be marked as the method in which the fuse function needs to be enabled by adding a preset annotation to the target method of the interface. Meanwhile, the forward notification and a backward notification may be set for the AOP section of fusing that is added to the target method in advance, so as to provide an execution entry point for determining of a fusing rule and determining of a logical switch of a circuit breaker that is configured to fuse. The annotation may include a special tag applied to elements such as a class, a method, a parameter, a variable, a constructor, and a package in a computer program language. The tag may be read during compilation, loading, and operation, and corresponding processing may be performed, and annotation information may be read during operation or compilation by an annotation processor or a reflection mechanism, so as to perform specific processing. The AOP section may be a JAVA Aspect Oriented Programming technology, which is referred to as Aspect Oriented Programming, and can execute extended code before and after execution of the target method, thereby improving code extensibility while reducing code coupling. The circuit breaker may include a state machine of a fusing logic switch, which may include three modes: open, closed, and half open.

It could be understood that, the target forward notification may include a forward processing logic of the AOP section preset for the target method, and the target forward notification may be triggered to execute before the target method is called. The meta information of the target method may include information such as an Internet Protocol (IP) address, an application name, a name of a class to which the method belongs, a method name, an in/out parameter name of the method, and a return value name of the method that are of a system application that executes the interface fusing method. The foregoing fusing configuration parameter may include fusing rule data pre-configured on an associated background management system for the target method, and may include a fusing policy, for example, determining, according to an anomaly quantity, whether to fuse, or determining, according to an anomaly proportion, whether to fuse. The fusing configuration parameter may further include configuration parameters such as a proportion threshold, an anomaly quantity threshold, a fusing duration (unit may be milliseconds), a minimum quantity of requests, a statistical duration (unit may be milliseconds), a fusing rule (specifically may be a MVEL expression), a fusing degradation policy, a specified anomaly class name, and whether to include a captured anomaly in determining policy of fusing. The fusing configuration parameter may be set to the target method that needs to fuse. For a method in which no fusing configuration is performed, a corresponding fusing configuration parameter may be null. A current state of the circuit breaker may be one of open, half open, and closed. The MVEL expression may be a lightweight expression language configured for reflection optimization and script execution. The MVEL expression may be based on Java syntax and be suitable for scenarios in which dynamic calculation and logic processing are required.

When a system application is enabled (e.g., an application of an upstream service system that needs to call an interface), an annotation scanner may scan all of meta information of methods that need to be enabled for the fusing function and are marked by the preset annotation, and send all of the meta information of the methods marked with the annotation and corresponding fusing configuration parameter to a data storage center (e.g., Nacos (Dynamic Naming and Configuration Service)) by a network request for saving. After a background management application is enabled, the background management application may read target methods of all interfaces from the data storage center, and display the meta information and the previously configured fusing configuration parameters in a visual manner on a corresponding display interface.

The foregoing fusing configuration parameter may be configured based on the display interface. Specifically, a configuration entry of the foregoing fusing configuration parameter may be provided on the display interface associated with the background management application. The user may add or modify a value of the corresponding fusing configuration parameter and save the value to the data storage center. After saving the value, the data storage center may send a network request to all application machines of the system, and push the latest fusing configuration parameter to a machine node of each of the application machines. After receiving the latest fusing configuration parameter, the machine node may classify and sort the fusing configuration parameter and the meta information, and save the latest fusing configuration parameter and meta information into a machine memory, so that the latest fusing configuration parameter may be used in a subsequent interface calling process for fusing determining. In addition, counters corresponding to the quantity of calling times and the quantity of error calling times respectively that are configured for fusing statistics may be initialized to 0.

Before the target method is called, the forward processing logic of the AOP section may be executed based on the preset target forward notification. In the forward processing logic, the corresponding fusing configuration parameter may be acquired from the data storage center according to the meta information of the target method. Then, in the forward processing logic, it may be determined, according to the fusing configuration parameter and the current status of the circuit breaker, whether the target method meets the calling condition. After it is determined that the calling condition is met, a specific logic of the called target method may be executed, i.e., a processing logic in the target method may be executed.

The calling condition may be preset and configured to determine whether the target method has been first executed with a fusing degradation policy. The calling condition may not be met for a method that has been executed with the fusing degradation policy. A method that is not executed with the fusing degradation policy may meet the calling condition.

Step 220 includes determining, based on a target backward notification, whether the target method is called successfully, if yes, executing a preconfigured MVEL expression according to the meta information of the target method; and if an executing result of the MVEL expression is true, counting the quantity of calling times and the quantity of error calling times. The target backward notification is a backward notification of the AOP section that is pre-configured for the target method.

After the target method is called, a backward notification, i.e., a backward processing logic, of the AOP section may be triggered to execute. In the backward processing logic, it may be determined whether the target method is called successfully, in other words, whether the target method is successfully executed. The fusing configuration parameter may be acquired according to the meta information of the target method, and then it may be determined, according to calling status, whether to perform fusing. After the target method is called successfully, a preconfigured fusing rule may be executed. The fusing rule may include the MVEL expression. Specifically, the preconfigured MVEL expression may be substituted with in/out parameter information of the target method, and it may be determined, according to an executing result of the MVEL expression, whether the method needs to be fused again. The in/out parameter information may include an input parameter and output information of the target method. A code similar to Java may be executed according to a rule by the MVEL expression, an input parameter group of the target method (i.e., an array of input parameters) and an output parameter of the target method may be determined. For example, when the MVEL expression is "param[0] == 123456 && result == 'Failed' ", a corresponding meaning may be that if a first parameter of the input parameter group of the target method that is parsed is equal to "123456" and the output parameter of the target method is a string of "Failed", the executing result of the MVEL expression may be true. It may indicate that in this case, an executing result of the target method may meet a service scenario that needs to be fused. For example, a field in an interface response may include a case that funds are insufficient. At this moment, the quantity of calling times and the quantity of error calling times may be counted.

In addition, if the executing result of the MVEL expression is false, the current status of the circuit breaker may be determined. If the current status is on, no operation may be performed. If the current status of the circuit breaker is half open, the half-open state of the circuit breaker may be switched to closed. If the current status of the circuit breaker is closed, no operation may be performed.

Step 230 includes if the target method is failed to be called, counting the quantity of calling times and the quantity of error calling times according to the fusing configuration parameter.

When the target method is failed to be called, it may need to determine whether to count the error calling according to the fusing configuration parameter. For example, the anomaly that the target method is failed to be called may have the same anomaly class name as specified in the fusing configuration parameter. In this case, the calling for the method may meet the anomaly that needs to be fused, the quantity of calling times and the quantity of error calling times may be counted, and the quantity of calling times and the quantity of error calling times may be increased by 1.

Step 240 includes determining, with reference to the fusing configuration parameter and according to the quantity of calling times and the quantity of error calling times in a preset sliding time window, whether to perform fusing processing on the target method, if yes, performing fusing processing on the target method.

Specifically, a total quantity of calling times and a total quantity of error calling times in the sliding time window may be counted, so as to determine whether the fusing processing needs to be performed on the target method. After it is determined that the fusing processing needs to be performed on the target method, the fusing degradation policy may be performed on the target method, for example, a preset anomaly may be thrown. In addition, the current state of the circuit breaker may be set to open, and a timestamp of next fusing resetting may be set according to a current timestamp of the system and a fusing duration, so as to control the target method to be not called within the fusing duration.

In particular, the sliding time window may be implemented by dividing a time interval into smaller sub-interval in a fixed time interval. When counting each time, it may slide N sub-intervals forward according to the current time, and counting values of all N sub-intervals may be accumulated. Thus, flexible and accurate statistical counting may be achieved over time.

In the above step 210 to step 240, the meta information and the fusing configuration parameter of the target method of the interface are acquired based on the target forward notification, and it is determined, according to the fusing configuration parameter and the current status of the circuit breaker, whether the target method meets the calling condition, if yes, the target method is called, and the target forward notification is the forward notification of the AOP section that is pre-configured for the target method. It is determined, based on the target backward notification, whether the target method is called successfully, if yes, the preconfigured fusing rule is executed according to the meta information of the target method. If the executing result of the fusing rule is true, the quantity of calling times and the quantity of error calling times are counted, and the target backward notification is the backward notification of the AOP section that is pre-configured for the target method. If the target method is failed to be called, the quantity of calling times and the quantity of error calling times are counted according to the fusing configuration parameter. It is determined, with reference to the fusing configuration parameter and according to the quantity of calling times and the quantity of error calling times in the preset sliding time window, whether to perform fusing processing on the target method, if yes, the fusing processing is performed on the target method. A fusing determination of the target may be implemented by the AOP section, the fusing processing may be performed in time for the target method that meets a fusing triggering condition, thereby avoiding a relatively high failure rate due to frequent calling for a service interface that fails to respond.

In an embodiment, based on step 210, determining, according to the fusing configuration parameter and the current status of the circuit breaker, whether the target method meets the calling condition may further include: in a case that the fusing configuration parameter is not null and the current state of the circuit breaker is closed, determining that the target method meets the calling condition.

In the forward processing logic of the AOP section configured for the target method, it may be determined whether the fusing configuration parameter is null, if no, the current state of the circuit breaker corresponding to the target method may need to be obtained. If the current state of the circuit breaker is closed, it may indicate that the target method has not been fused before. Therefore, the target method may be directly called.

In the present embodiment, with reference to the fusing configuration parameter and the state of the circuit breaker, it may be determined whether to call the target method, so as to avoid calling a method that fails to respond, thereby avoiding a relatively high failure rate of service execution caused by frequent calling for the method that fails to respond.

In addition, in an embodiment, based on step 210, determining, according to the fusing configuration parameter and the current status of the circuit breaker, whether the target method meets the calling condition may further include: in a case that the fusing configuration parameter is not null and the current state of the circuit breaker is open, determining whether a current timestamp is greater than or equal to a next retry timestamp, if yes, setting the current state of the circuit breaker to half open, and confirming that the target method meets the calling condition, in which the next retry timestamp is determined according to a fusing duration specified by the fusing configuration parameter and a timestamp corresponding to last performing fusing processing on the target method; otherwise, confirming that the target method does not meet the calling condition, and executing a preset fusing degradation policy.

When the current state of the circuit breaker is open, it may indicate that the target method has been fused before. Therefore, it may need to determine whether the fusing processing set for the target method exceeds preset fusing duration, if yes, it may need to determine whether the current calling limitation on the target method can be released.

Specifically, it may be determined whether the current timestamp is greater than or equal to the next retry timestamp, if yes, it may indicate that fusing processing of the target method exceeds the fusing duration, and this calling request for the target method may be allowed to complete calling for the target method. In other words, the current calling request may be used as a sniffing request for fusing resetting, so that it may be determined, in the backward processing logic of the AOP section, whether normal calling for the target method can be restored. In addition, the current state of the circuit breaker may be set to half open. The foregoing next retry timestamp may be determined according to a sum of the preset fusing duration and a timestamp corresponding to the latest fusing processing performed on the target method.

When the current timestamp is still less than the next retry timestamp, it may indicate that a duration after the target method is fused does not exceed the fusing duration. Therefore, the fusing processing may need to be continued, so as to prevent the current calling for the target method. A preset fusing degradation policy may be executed, for example, a specific anomaly may be thrown.

In the present embodiment, in a case that the circuit breaker is open, it may be determined, according to timestamp information, to call the target method or continue to restrict calling the target method, so that accurate and flexible fusing processing may be implemented, thereby avoiding an excessive calling limitation on a method that can be called normally, and an error calling on a method that cannot respond normally.

In addition, in an embodiment, based on step 210, determining, according to the fusing configuration parameter and the current status of the circuit breaker, whether the target method meets the calling condition may further include: in a case that the fusing configuration parameter is not null and the current state of the circuit breaker is half open, confirming that the target method does not meet the calling condition, and executing a preset fusing degradation policy. In other words, in a case that the current state of the circuit breaker is half open, the fusing degradation policy may still need to be performed, so as to prevent calling for the target method.

In addition, the interface fusing method may further include: in a case that the fusing configuration parameter is null, confirming that the target method meets the calling condition. The fusing configuration parameter is null, and it may indicate that fusing configuration has not been performed on the target method and the target method can be called directly.

In addition, in an embodiment, if the target method is failed to be called, counting the quantity of calling times and the quantity of error calling times according to the fusing configuration parameter may further include: if the target method is failed to be called, acquiring a calling anomaly type of calling failure of the target method; and determining whether the calling anomaly type is consistent with a preset anomaly type specified in the fusing configuration parameter, if yes, counting the quantity of calling times and the quantity of error calling times in the current sliding time window.

In other words, after calling for the target method is completed, the backward processing logic of the AOP section may be performed. In the backward processing logic, the fusing configuration parameter may be acquired according to the meta information of the target method. When the target method is called with anomaly, such as a network timeout or a system anomaly, a corresponding interface may present a corresponding service anomaly. After the service anomaly is captured by the AOP section, a statistics counter under the current sliding time window may be first acquired according to the meta information of the target method, including a general counter of method calling and a counter of method calling error, and it may be determined, according to the anomaly type configured in the background, whether the currently thrown service anomaly is included in the anomaly type specified in the fusing configuration parameter (the type may be represented by a specific anomaly class name). When the anomaly thrown at this moment has the same anomaly type as specified anomaly type, the target method may meet the anomaly corresponding to the fusing, the general counter of method calling may be increased by 1, and the counter of method calling error may be increased by 1. Exemplarily, some anomaly classes of Java language may be selected as the specified anomaly type of the fusing processing, or all anomaly classes of Java language may be selected as the specified anomaly type of the fusing processing.

In the present embodiment, it may be determined, based on the anomaly type, whether the calling error of the target method needs to be counted, so that accurate anomaly screening can be implemented.

In addition, in an embodiment, based on step 240, determining, with reference to the fusing configuration parameter and according to the quantity of calling times and the quantity of error calling times in a preset sliding time window, whether to perform fusing processing on the target method may further include: when a fusing determining condition specified by the fusing configuration parameter is an anomaly quantity, the quantity of calling times is greater than or equal to a minimum quantity of requests specified by the fusing configuration parameter, and the quantity of error calling times is greater than or equal to a quantity threshold specified by the fusing configuration parameter, confirming to perform fusing processing on the target method, set the current state of the circuit breaker to open, and set a next retry timestamp according to a specified fusing duration; and when the fusing determining condition is an anomaly proportion, the quantity of calling times is greater than or equal to the minimum quantity of requests, and an error calling proportion is greater than or equal to a proportion threshold specified by the fusing configuration parameter, confirming to perform fusing processing on the target method, set the current state of the circuit breaker to open, and set the next retry timestamp according to the fusing duration. The error calling proportion may be a proportion of the quantity of error calling times to the quantity of calling times.

The current state of the circuit breaker may be first determined. If the current state of the circuit breaker is open, no operation may be performed. If the current state of the circuit breaker is half open, the current state of the circuit breaker may be switched to open. If the current state of the circuit breaker is closed, the current state of the circuit breaker may be set according to a configured fusing determining condition. Specifically, if the fusing determining condition is the anomaly quantity, it may indicate that the quantity of error calling times is used as a basis for whether to perform fusing processing. Therefore, it may need to determine whether a total quantity of requests (i.e., the quantity of calling times) for calling the target method in the current sliding time window is greater than or equal to the preset minimum quantity of requests, if no, the request of calling the target method may be allowed this time. Otherwise, it may be determined whether the quantity of error calling times is greater than or equal to the preset quantity threshold, if no, the request of calling the target method may be allowed this time, and if yes, the current state of the circuit breaker may be set to open, and the next retry timestamp may be set according to a sum of the current timestamp and the fusing duration, so as to indicate a fusing resetting time, which may form a logical closed-loop with determination of calling condition in the forward processing logic.

In addition, if the fusing determining condition is the anomaly proportion, it may be determined whether the total quantity of requests (i.e., the quantity of calling times) is greater than or equal to the preset minimum quantity of requests, if no, the request of calling the target method may be allowed this time, if yes, the error calling proportion at this moment may be calculated, and the error calling proportion may be the proportion of the quantity of error calling times to the quantity of calling times. If the error calling proportion is greater than or equal to the preset proportion threshold, the current state of the circuit breaker may be set to open, and the timestamp of next fusing resetting (the next retry timestamp) may be set according to the current timestamp and the fusing duration. If the error calling proportion is less than the proportion threshold, the request of calling the target method may be allowed this time.

In the present embodiment, based on the anomaly quantity or the anomaly proportion respectively, fusing processing may be determined according to error calling frequency obtained by statistics collection, so as to implement accurate and timely fusing processing of abnormal calling of the interface.

In particular, in an embodiment, duration of the sliding time window may be set according to fusing statistics duration specified by the fusing configuration parameter, and the sliding time window may include several sub-time window intervals. In the present embodiment, a length of the sliding time window may be set according to the fusing statistics duration specified in the fusing configuration parameter. When fusing statistics collection is performed each time, the current sliding time window may be determined according to the current time and the fusing statistics duration. Therefore, the time window in the present embodiment may be a flexible window with dynamic change. Furthermore, the sliding time window may be divided into a plurality of smaller sub-time window intervals, and corresponding quantity of call times and quantity of error calling times may be counted in each of sub-time window intervals.

Based on this, compared with a case that a fixed time window may encounter a traffic surge in response to a change-over period of two windows, and a problem that an anomaly count is inaccurate and fusing processing cannot be accurately performed may occur, the present embodiment may flexibly, accurately, and timely perform fusing processing for calling anomaly generated at different time, thereby further improving timeliness and accuracy of fusing processing of the interface.

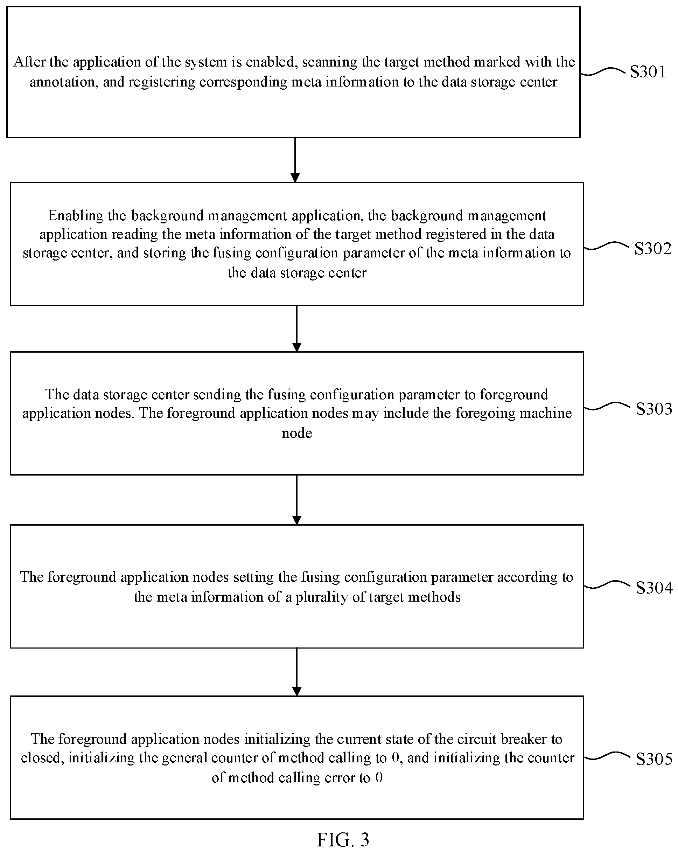

FIG. 3 is a flowchart of a configuring method of fusing configuring parameter in some embodiments, and the configuration method may be performed after an application of the system is enabled. Referring to FIG. 3, the configuration method of fusing configuration parameter may include the following step 301 to step 305.

Step 301 may include after the application of the system is enabled, scanning the target method marked with the annotation, and registering corresponding meta information to the data storage center.

Step 302 may include enabling the background management application, the background management application reading the meta information of the target method registered in the data storage center, and storing the fusing configuration parameter of the meta information to the data storage center.

Step 303 may include the data storage center sending the fusing configuration parameter to foreground application nodes. The foreground application nodes may include the foregoing machine node.

Step 304 may include the foreground application nodes setting the fusing configuration parameter according to the meta information of a plurality of target methods.

Step 305 may include the foreground application nodes initializing the current state of the circuit breaker to closed, initializing the general counter of method calling to 0, and initializing the counter of method calling error to 0.

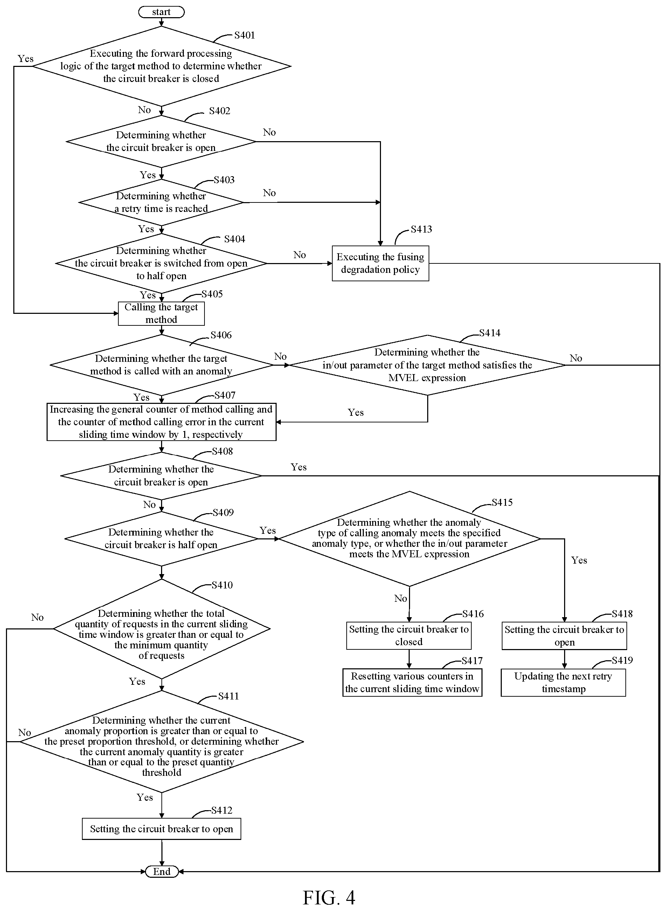

FIG. 4 is a flowchart of an interface fusing method in some embodiments. Referring to FIG. 4, the interface fusing method may include the following step 401 to step 419.

Step 401 may include executing the forward processing logic of the target method to determine whether the circuit breaker is closed, if yes, performing step 405, otherwise, performing step 402. Before the target method is called, it is determined whether the current state of the circuit breaker is closed by the forward processing logic of the configured AOP section.

Step 402 may include determining whether the circuit breaker is open, if yes, performing step 403, otherwise, performing step 413.

Step 403 may include determining whether a retry time is reached, if yes, performing step 404, otherwise, performing step 413. It is determined, according to a size relationship between the current timestamp and the next retry timestamp, whether the retry time is reached.

Step 404 may include determining whether the circuit breaker is switched from open to half open, if yes, performing step 405, otherwise, performing step 413.

Step 405 may include calling the target method.

Step 406 may include determining whether the target method is called with an anomaly, if yes, performing step 407, otherwise, performing step 414.

Step 407 may include increasing the general counter of method calling and the counter of method calling error in the current sliding time window by 1, respectively.

Step 408 may include determining whether the circuit breaker is open, if yes, ending the process, otherwise, performing step 409.

Step 409 may include determining whether the circuit breaker is half open, if yes, performing step 415, otherwise, performing step 410.

Step 410 may include determining whether the total quantity of requests in the current sliding time window is greater than or equal to the minimum quantity of requests, if yes, performing step 411, otherwise, ending the process.

Step 411 may include determining whether the current anomaly proportion is greater than or equal to the preset proportion threshold, or determining whether the current anomaly quantity is greater than or equal to the preset quantity threshold, if yes, performing step 412, otherwise, ending the process. The current anomaly proportion may be a proportion of the quantity of error calling times to the quantity of calling times. The anomaly quantity may be the quantity of error calling times.

Step 412 may include setting the circuit breaker to open, and ending the process.

Step 413 may include executing the fusing degradation policy and ending the process. The fusing degradation policy may present the preset anomaly.

Step 414 may include determining whether the in/out parameter of the target method satisfies the MVEL expression, if yes, performing step 407, otherwise, ending the process.

Step 415 may include determining whether the anomaly type of calling anomaly meets the specified anomaly type, or whether the in/out parameter meets the MVEL expression, if yes, performing step 418, otherwise, performing step 416.

Step 416 may include setting the circuit breaker to closed.

Step 417 may include resetting various counters in the current sliding time window, and ending the process. The general counter of method calling and the counter of method calling error may be reset.

Step 418 may include setting the circuit breaker to open.

Step 419 may include updating the next retry timestamp, and ending the process.

In the foregoing step 401 to step 419, the in/out parameter of the target method may be intercepted and captured by the AOP section, and the MVEL expression may be executed on the in/out parameter by the dynamically configured MVEL expression. If the executing result of the MVEL expression is satisfied and the executing result is true, the calling may be marked as an abnormal calling this time. Then, by the configured fusing triggering condition, the switch of the circuit breaker for fusing may be controlled within the sliding time window, so that the interface calling may be fused and the fusing degradation policy may be executed at the next calling, so as to protect the calling for the service interface from a relatively high failure rate.

The following takes an example to describe the interface fusing method in the foregoing embodiments. Firstly, an application name A, an interface class name B, and a target method name C of an interface class of the system may be set. Then, a full-path unique identifier of the target method may be determined as "A#B#C" according to the foregoing application name, the interface class name, and the target method name of the interface class. The fusing determining condition of the target method may be configured as an anomaly quantity, i.e., it is determined whether to perform fusing processing according to whether the anomaly quantity exceeds the quantity threshold. The count quantity threshold may be set as 1, and the minimum quantity of requests may be set as 1. The fusing duration may be set as 10000 milliseconds, and the fusing statistics duration may be set as 180000 milliseconds. The content of the MVEL expression may be set as "param[0] == 123456 && result == 'insufficient balance' ", i.e., when the input parameter of the target method is "123456" and the executing result of the target method is returning a string "insufficient balance", the executing result of the MVEL expression may be true. A flag bit for fusing statistics including anomaly. The specified anomaly class name may be set to all of Java class names. The fusing degradation policy may be set as presenting the preset anomaly.

In other words, the foregoing fusing configuration may be as follows: in a time that the statistical duration is 180000 milliseconds, if the quantity of calling times of the target method meets the requirement that the minimum quantity of requests is 1, and the quantity of error calling times is 1 or the MVEL expression is true for one time, the fusing anomaly may be thrown in the fusing duration of 10000 milliseconds, and the calling for the target method may be continuously fused.

"@Fusing" may be used as an annotation to mark the target method in which a fusing function needs to be enabled. For example, the annotation of "@Fusing" may be set on the target method "test", and the target method may be marked that a fusing determining function needs to be enabled. The content of the target method may be as follows:

```
 "@Fusing
     Public String test (String reqId){
        System.out.println (reqId);
        If ("123".equalsIgnoreCase (reqId)){
        throw new BizException("123 digits are invalid, an anomaly is thrown");
        }
        Return "insufficient balance";
     }"
```

When the foregoing target method is called, an input parameter "reqId" may be output first, and then reqId may be specified to be equal to a string "123" to simulate the calling anomaly of the target method. In this case, an anomaly type of "BizException" may be directly thrown. If reqId is specified as a string "1234", it is used to simulate a case that data is returned normally after the target method is called. In this case, the MVEL expression constructed above may not be met. If reqId is specified as a string "123456", it is used to simulate a case that data is returned normally after the target method is called. Because a returned value of the method is fixed as "insufficient balance", the MVEL expression constructed above may be satisfied. It may be understood that the executing logic of the foregoing target method and the specific content of the MVEL expression are merely examples, and do not constitute a limitation on the target method and the MVEL expression.

After the application is enabled, the background configuration log may be acquired, so as to obtain the full-path unique identifier, the fusing configuration parameter, and the meta information of the target method. When the foregoing target method is called, if the input parameter "reqId" is "1234", the target method may respond normally and output the information of "insufficient balance". In this case, the target method is called successfully, and the MVEL expression may be executed to capture the in/out parameters. In this case, the input parameter group param[0] may be "1234", which does not meet the condition of the input parameter group "param[0] == 123456" in the MVEL expression. Therefore, the executing result of the MVEL expression may be false, and the target method may be called normally.

When the foregoing target method is called, if the input parameter "reqId" is set to "123", an anomaly may be thrown in the target method, and corresponding anomaly information may be "123 digits are invalid, and an anomaly is thrown". Then, when the target method is called for the second time by the same input parameter (i.e., when "reqId" is set to "123"), because the quantity threshold of the quantity of anomaly times specified in the foregoing fusing configuration parameter is 1, the second calling may trigger fusing processing on the target method. In this case, information that service is fused may be output to the user. In this case, the state of the circuit breaker may be switched from closed to open. When the target method is called for the third time, if the input parameter is changed to "1234" (i.e., simulating normal request), after exceeding 10000 milliseconds of the fusing duration, it may try to call the target method again. In this case, the status of the circuit breaker may be switched from half open to open, and the target method may be restored to call normally.

In addition, when the target method is called, the input parameter is changed to "123456" (simulating to meet the condition of the MVEL expression), because the return value of the target method is "insufficient balance", the executing result of the MVEL expression "param[0] == 123456 && result == 'insufficient balance' " that is executed to the in/out parameter of the target method may be true. In this case, the circuit breaker may be switched from closed to open. In the second calling, the input parameter may still be "123456". Since the circuit breaker has been opened, the fusing may be triggered, and the anomaly may be thrown. For the third calling, the input parameter may be changed to "1234" (simulating normal request). After exceeding 10000 milliseconds of the fusing duration, it may try to call the target method again. In this case, the circuit breaker may be switched from half open to closed, and the target method may be restored to call normally.

An interface fusing apparatus is further provided in the present embodiment, and the interface fusing apparatus is configured to implement the foregoing embodiments and alternative implementations. Details are not described again. The terms "module", "unit", "subunit" and the like used in the following may implement a combination of software and/or hardware of a preset function. Although the apparatus described in the following embodiments is preferably implemented in software, implementation of hardware, or a combination of software and hardware, is possible and conceived.

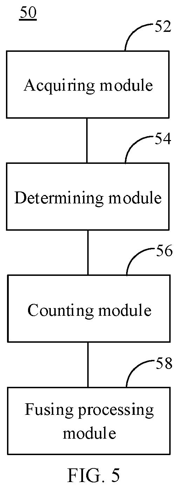

FIG. 5 is a block diagram of the interface fuse apparatus 50 in the present embodiment. Referring to FIG. 5, the interface fusing apparatus 50 includes an acquiring module 52, a determining module 54, a counting module 56, and a fusing processing module 58.

The acquiring module 52 is configured for acquiring meta information and a fusing configuration parameter of a target method of an interface based on a target forward notification, and determining, according to the fusing configuration parameter and a current status of a circuit breaker, whether the target method meets a calling condition, if yes, calling the target method. The target forward notification is a forward notification of an AOP section that is pre-configured for the target method.

The determining module 54 is configured for determining, based on a target backward notification, whether the target method is called successfully, if yes, executing a preconfigured fusing rule according to the meta information of the target method; and if an executing result of the fusing rule is true, counting the quantity of calling times and the quantity of error calling times. The target backward notification is a backward notification of the AOP section that is pre-configured for the target method.

The counting module 56 is configured for counting the quantity of calling times and the quantity of error calling times according to the fusing configuration parameter if the target method is failed to be called; and determining, with reference to the fusing configuration parameter and according to the quantity of calling times and the quantity of error calling times in a preset sliding time window, whether to perform fusing processing on the target method, if yes, performing fusing processing on the target method.

It should be noted that the foregoing modules may be functional modules or program modules, and may be implemented by software or hardware. For modules implemented by using hardware, the foregoing modules may be located in a same processor. Alternatively, the foregoing modules may be located in different processors in any combination.

It should be noted that for a specific example in the present embodiment, reference may be made to the example described in the foregoing embodiment and the optional implementation, and details are not described in the present embodiment.

In addition, with reference to the interface fusing method provided in the foregoing embodiments, the present embodiment may further provide a storage medium for implementation. A computer program is stored in the storage medium. When the computer program is executed by a processor, any interface fusing method in the foregoing embodiments is implemented.

It should be understood that a specific embodiment described herein is merely used to explain the application, but is not used to limit the application. According to the embodiments provided in the present invention, all other embodiments obtained by one skilled in the art without creative efforts fall within the protection scope of the present invention.

It should be noted that user information (including but not limited to user device information, user personal information, and the like) and data (including but not limited to data used for analysis, stored data, and displayed data) related to the present invention are information and data that are authorized by the user or that are fully authorized by each party.

It is obvious that the accompanying drawings are merely some examples or embodiments of the present invention. One skilled in the art may also apply the present invention to another similar case according to these accompanying drawings, but no creative effort is required. In addition, it may be understood that, although work performed in a development process may be complex and lengthy, for one skilled in the art, some changes such as design, manufacture, or production that are made according to technical content disclosed in the present invention are merely conventional technical means, and should not be considered as deficiencies disclosed in the present invention.

The term "embodiment" in the present invention refers to that a specific feature, structure, or feature described with reference to the embodiments may be included in at least one embodiment of the present invention. Each location of the phrase appearing in the description does not necessarily mean the same embodiment, nor does it mean that the phrase is mutually exclusive and independent or optional with another embodiment. One skilled in the art can clearly or implicitly understand that the embodiments described in the present invention may be combined with other embodiments in a case that there is no conflict.

The above-described embodiments express only several embodiments of the present invention, which are described in a more specific and detailed manner, but are not to be construed as a limitation on the scope of the present invention. For the skill in the art, several deformations and improvements can be made without departing from the conception of the present invention, all of which fall within the scope of protection of the present invention. Therefore, the scope of protection of the present invention shall be subject to the attached claims.

## Claims

1. An interface fusing method, **characterized by** comprising:
acquiring meta information and a fusing configuration parameter of a target method of an interface based on a target forward notification, and determining, according to the fusing configuration parameter and a current status of a circuit breaker, whether the target method meets a calling condition,
if yes, calling the target method, wherein the target forward notification is a forward notification of an Aspect Oriented Programming section that is pre-configured for the target method;
determining, based on a target backward notification, whether the target method is called successfully,
if yes, executing a preconfigured fusing rule according to the meta information of the target method; and if an executing result of the fusing rule is true, counting the quantity of calling times and the quantity of error calling times, wherein the target backward notification is a backward notification of the Aspect Oriented Programming section that is pre-configured for the target method;
if the target method is failed to be called, counting the quantity of calling times and the quantity of error calling times according to the fusing configuration parameter; and
determining, with reference to the fusing configuration parameter and according to the quantity of calling times and the quantity of error calling times in a preset sliding time window, whether to perform fusing processing on the target method,
if yes, performing fusing processing on the target method.

2. The method of claim 1, wherein determining, according to the fusing configuration parameter and the current status of the circuit breaker, whether the target method meets the calling condition further comprises:
in a case that the fusing configuration parameter is not null and the current state of the circuit breaker is closed, determining that the target method meets the calling condition.

3. The method of claim 1, wherein determining, according to the fusing configuration parameter and the current status of the circuit breaker, whether the target method meets the calling condition further comprises:
in a case that the fusing configuration parameter is not null and the current state of the circuit breaker is open, determining whether a current timestamp is greater than or equal to a next retry timestamp,
if yes, setting the current state of the circuit breaker to half open, and confirming that the target method meets the calling condition, wherein the next retry timestamp is determined according to a fusing duration specified by the fusing configuration parameter and a timestamp corresponding to last performing fusing processing on the target method;
otherwise, confirming that the target method does not meet the calling condition, and executing a preset fusing degradation policy.

4. The method of claim 1, wherein determining, according to the fusing configuration parameter and the current status of the circuit breaker, whether the target method meets the calling condition further comprises:
in a case that the fusing configuration parameter is not null and the current state of the circuit breaker is half open, confirming that the target method does not meet the calling condition, and executing a preset fusing degradation policy.

5. The method of claim 1, further comprising:
in a case that the fusing configuration parameter is null, confirming that the target method meets the calling condition.

6. The method of claim 1, wherein if the target method is failed to be called, counting the quantity of calling times and the quantity of error calling times according to the fusing configuration parameter further comprises:
if the target method is failed to be called, acquiring a calling anomaly type of calling failure of the target method; and
determining whether the calling anomaly type is consistent with a preset anomaly type specified in the fusing configuration parameter,
if yes, counting the quantity of calling times and the quantity of error calling times in the current sliding time window.

7. The method of claim 1, wherein determining, with reference to the fusing configuration parameter and according to the quantity of calling times and the quantity of error calling times in a preset sliding time window, whether to perform fusing processing on the target method further comprises:
when a fusing determining condition specified by the fusing configuration parameter is an anomaly quantity, the quantity of calling times is greater than or equal to a minimum quantity of requests specified by the fusing configuration parameter, and the quantity of error calling times is greater than or equal to a quantity threshold specified by the fusing configuration parameter, confirming to perform fusing processing on the target method, set the current state of the circuit breaker to open, and set a next retry timestamp according to a specified fusing duration; and
when the fusing determining condition is an anomaly proportion, the quantity of calling times is greater than or equal to the minimum quantity of requests, and an error calling proportion is greater than or equal to a proportion threshold specified by the fusing configuration parameter, confirming to perform fusing processing on the target method, set the current state of the circuit breaker to open, and set the next retry timestamp according to the fusing duration, wherein the error calling proportion is a proportion of the quantity of error calling times to the quantity of calling times.

8. The method of any one of claims 1 to 7, wherein duration of the sliding time window is set according to fusing statistics duration specified by the fusing configuration parameter, and the sliding time window comprises several sub-time window intervals.

9. An interface fusing apparatus, **characterized by** comprising an acquiring module, a determining module, a counting module, and a fusing processing module, wherein
the acquiring module is configured for acquiring meta information and a fusing configuration parameter of a target method of an interface based on a target forward notification, and determining, according to the fusing configuration parameter and a current status of a circuit breaker, whether the target method meets a calling condition,
if yes, calling the target method, wherein the target forward notification is a forward notification of an Aspect Oriented Programming section that is pre-configured for the target method;
the determining module is configured for determining, based on a target backward notification, whether the target method is called successfully,
if yes, executing a preconfigured fusing rule according to the meta information of the target method; and if an executing result of the fusing rule is true, counting the quantity of calling times and the quantity of error calling times, wherein the target backward notification is a backward notification of the Aspect Oriented Programming section that is pre-configured for the target method;
the counting module is configured for counting the quantity of calling times and the quantity of error calling times according to the fusing configuration parameter when the target method is failed to be called; and
the fusing processing module is configured for determining, with reference to the fusing configuration parameter and according to the quantity of calling times and the quantity of error calling times in a preset sliding time window, whether to perform fusing processing on the target method,
if yes, performing fusing processing on the target method.

10. A computer-readable storage medium, storing a computer program, wherein the computer program is executed by a processor to perform the method of any one of claims 1 to 8.
